# EUROPÄISCHE PATENTSCHRIFT

(11) **EP 0 717 693 B1**
(45) Veröffentlichungstag und Bekanntmachung des Hinweises auf die Patenterteilung: **06.08.1997**
(21) Anmeldenummer: 94925346.2
(22) Anmeldetag: 06.09.1994
(51) Int. Cl.: B62J 9/00

(54) **GEPÄCKHALTERUNG FÜR SÄTTEL, INSBESONDERE FÜR FAHRRÄDER**
LUGGAGE HOLDER FOR SADDLES, IN PARTICULAR ON BICYCLES
DISPOSITIF DE RETENUE DE BAGAGES A MONTER SUR DES SELLES, NOTAMMENT DE BICYCLETTES

(30) Priorität: 07.09.1993 DE 4330247
(43) Veröffentlichungstag der Anmeldung: 26.06.1996
(73) Patentinhaber: Keckeisen, Karl, J., D-88048 Friedrichshafen (DE)
(72) Erfinder: Keckeisen, Karl, J., D-88048 Friedrichshafen (DE)
(74) Vertreter: Oechssler, Dietrich, Dr. rer. nat.
(86) Internationale Anmeldenummer: DE9401018
(87) Internationale Veröffentlichungsnummer: WO9507205

(56) Entgegenhaltungen:
- EP-A- 0 413 106
- US-A- 4 440 332
- US-A- 4 566 617
- US-A- 4 643 343

## Beschreibung

### Technisches Gebiet

Die Erfindung bezieht sich auf eine Gepäckhalterung, insbesondere für Fahrräder, zur Befestigung eines Gepäckbehältnisses, welche ein das Gepäckbehältnis haltendes Befestigungsteil und einen unter dem Sattel befestigten Längsträger mit einer Aufnahme zum Einstecken des Befestigungsteils aufweist, wobei die Aufnahme rohrförmig ausgebildet, und ihre Längsachse in Fahrrichtung nach unten geneigt ist, und der Längsträger mit seinem gepäckseitigen Endbereich am hinteren Abschnitt mindestens einer Sattelfeder befestigt ist.

### Stand der Technik

Den nächstliegenden St.d.T., auf dem der Oberbegriff des Hauptanspruchs basiert, beschreibt das US-A-4 566 617, in dem ein Satteltaschenbausatz für ein Fahrrad offenbart ist, welcher die im vorangehenden Absatz aufgeführten Merkmale aufweist. Die Satteltasche ist dabei im wesentlichen unter dem Sattel angebracht. Sie darf deshalb nicht seitlich unter dem Sattel herausragen, weil sie sonst den Radfahrer beim Treten behindert.

Aus der US-A-4 643-343 ist eine Satteltasche bekannt, die mittels eines aus Flachmaterial hergestellten Halters an einem Beschlagteil unter dem Sattel anbringbar ist. Der Halter der Satteltasche kann zwar auf einfache Weise in das Beschlagteil eingeschoben bzw. aus ihm herausgezogen werden, kann sich aber ebensogut unbeabsichtigt lösen, wenn die Tasche nicht zusätzlich am Fahrradrahmen befestigt wird. Im übrigen ist keine seitliche Führung für die Satteltasche gewährleistet.

### Darstellung der Erfindung

Der Erfindung liegt die Aufgabe zugrunde, eine einfach gestaltete und leicht montierbare Gepäckhalterung zu schaffen, mit der ein Gepäckbehältnis in Fahrrichtung so hinter dem Sattel angebracht werden kann, daß sie den Radfahrer in keiner Weise behindert, und auf einfache Weise befestigt und wieder abgenommen werden kann, aber gegen ein unbeabsichtigtes Sichlösen gesichert ist.

Erfindungsgemäß wird die Aufgabe durch die im Anspruch 1 aufgeführten Merkmale gelöst.

Die Erfindung weist gegenüber dem Bekannten die Vorteile auf, daß die Gepäckhalterung, montiert an der Rück- bzw. Unterseite des Sattels, sehr leicht im Gewicht ist und gleichwohl auch schwerere Gepäckbehältnisse, wie einen Rucksack, tragen kann. Durch die Möglichkeit einer Befestigung eines Trägers unterhalb des Sattels ist der Träger fast unauffällig und eignet sich auch durch eine einfache Montage für fast jeden Satteltyp. Durch den gegen die Horizontale geneigten Einbau ist eine zusätzliche des dem Gepäckbehältnis zugeordneten Befestigungsteils an sich nicht nötig, weil sich das Gepäckstück durch Schwerkraft und Reibung im Längsträger selbst hält. Durch eine vorteilhafte Gestaltung des Befestigungsteils für das Gepäckbehältnis wird letzteres formstabil gehalten. Eine solche vorteilhafte Gestaltung ist dadurch gekennzeichnet, daß das Befestigungsteil die Form einer Gabel mit räumlich auf Abstand gehaltenen, freien Schenkeln hat, die am Gepäckbehältnis angreifen.

Gabelförmige Befestigungsteile, die mit den freien Schenkeln in Laschen an einem Gepäckbehältnis für Fahrräder eingreifen, sind aus der EP-A-0 413 106 und dem US-A-4 440 332 bekannt.

Vorteilhafte Ausgestaltungen der Erfindung gehen aus den Unteransprüchen und der nachfolgenden Beschreibung hervor.

Im folgenden wird die Erfindung anhand von durch Zeichnungen erläuterten Ausführungsbeispielen detailliert beschrieben. Es zeigen
Fig. 1 einen Schnitt durch eine Ausführungsform der erfindungsgemäßen, an der Unterseite eines Fahrradsattels montierten Gepäckhalterung mit einem Gepäckbehältnis,
Fig. 2 einen Schnitt entlang einer Linie II-II in FIg. 1 durch die montierte Gepäckhalterung ohne Sattel, in einem gegenüber der Darstellung der Fig. 1 vergrößerten Maßstab,
Fig. 3 einen Schnitt entlang einer Linie III-III in FIg. 1 durch den Längsträger, in einem gegenüber der Fig. 1 vergrößerten Maßstab, mit dem Gepäckbehältnis und dem dazugehörigen Befestigungsteil,
Fig. 3a den in der Fig. 3 gezeigten, vom Kreis IV eingerahmten Ausschnitt mit einer weiteren Ausführungsform des Längsträgers, bei der dessen tieferes Ende mittels eines Lagerbocks auch an den Sattelfedern befestigt ist, und
Fig. 4 a bis 4c verschiedene Ansichten einer Ausführungsform des Lagerbocks.

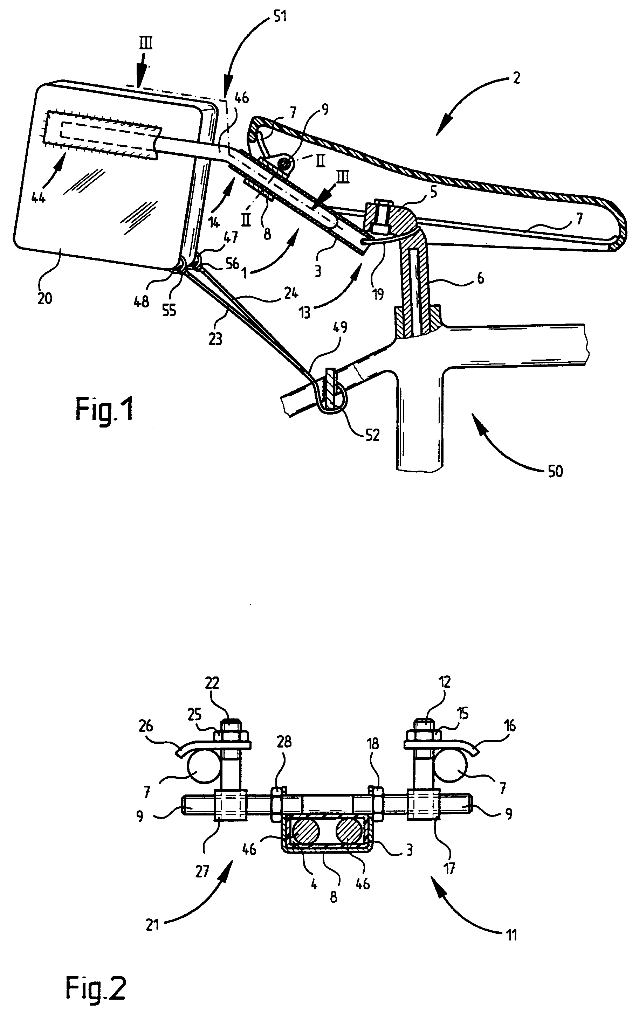

Die Gepäckhalterung 1 (Fig. 1) ist für die Montage unterhalb eines Sattels 2 gedacht. Ein Längsträger 3 hat eine rohrförmige Aufnahme 4 für ein Befestigungsteil 51 zum Halten eines Gepäckbehältnisses 20. Der sattelseitige Endbereich 13 des Längsträgers 3 befindet sich unterhalb eines Befestigungskopfs 5 einer Sattelstütze 6 für den Sattel 2 und liegt zumindest bei eingestecktem Befestigungsteil 51 an der Sattelstütze 6 an.

Der gepäckseitige Endbereich 14 des Längsträgers 3 ist durch eine gegen die Horizontale geneigte Einbauweise hoch durch einen Bügel 8 (Fig. 1, 2) fixiert. Dieser ist fest mit einem Querträger 9 verbunden. An beiden Seiten des Bügels 8 drückt jeweils ein auf den Querträger 9 aufgeschraubte Mutter 18, 28 gegen den Bügel 8, so daß dieser auf dem Querträger 9 unverrückbar festsitzt und den Längsträger 3 halt. Die Muttern 18, 28 sind vorzugsweise Stopmuttern. Auf die beiden Enden des Querträgers 9 sind Querträgerhalter 11, 21 aufgesteckt. Die Querträgerhalter 11, 21 weisen Gewindestifte 12, 22 quer zu Büchsen 17, 27 der Querträgerhalter 11, 21 auf. Auf den Gewindestiften 12, 22 sitzt jeweils eine Spannklemme 16, 26 mit jeweils einer Mutter 15, 25. Hierdurch ist die Gepäckhalterung 1 an den Sattelfedern 7 befestigt.

Der Querträger 9 dreht sich frei in den Querträgerhaltern 11, 21. Der Bügel 8 ist bis zum Ende des Einbaus relativ zum Längsträger 3 parallel zur Längsachse der Aufnahme 4 verschiebbar und wird dann durch Anziehen der Schraubenmuttern 18, 28 am Längsträger 3 festgeklemmt.

Das sattelseitige Ende 13 des Längsträgers 3 ist mittels einer lösbaren, flexiblen Halteschlaufe 19, die um den Befestigungskopf 5 der Sattelstütze 6 geschlungen ist, an letzterer fixiert.

Die Halteschlaufe 19 besteht entweder aus Metall oder Kunststoffmaterial.

Der Längsträger 3 besteht aus Metall oder Kunststoffmaterial.

Das Befestigungsteil 51 besteht im wesentlichen aus einem gebogenen Stangenmaterial und hat die Gestalt einer Haltegabel. Die Haltegabel weist räumlich auf Abstand gehaltene Schenkel 58, 59 auf. Sie greifen in Laschen 44, 57 ein, die am Gepäckbehältnis 20, vorzugsweise an gegenüberliegenden Seiten des Gepäckbehältnisses 20 vorhanden sind. Das andere Ende des Befestigungsteils 51 ist schaftartig ausgebildet. Der Schaft 46 des Befestigungsteils 51 liegt - ist er in die Aufnahme 4 des Längsträgers 3 eingeschoben - an seinen Seitenwänden an.

Durch die Schräglage der Gepäckhalterung 1 muß das Gepäckbehältnis 20 bzw. das Befestigungsteil 51 an dem Längsträger 3 an sich nicht zusätzlich fixiert werden. Das Befestigungsteil 51 halt nämlich durch Schwerkraft und Reibung im Längsträger 3.

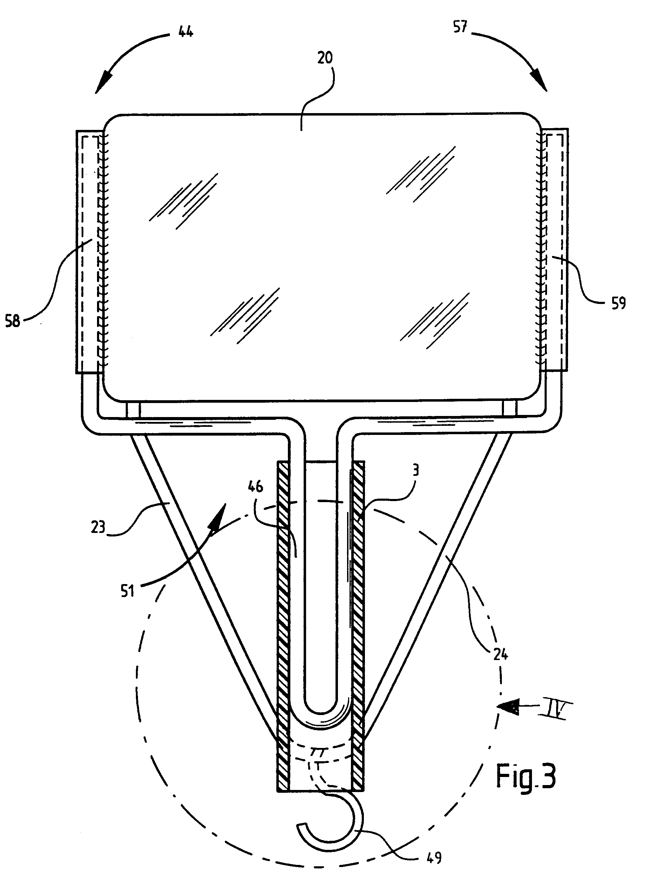

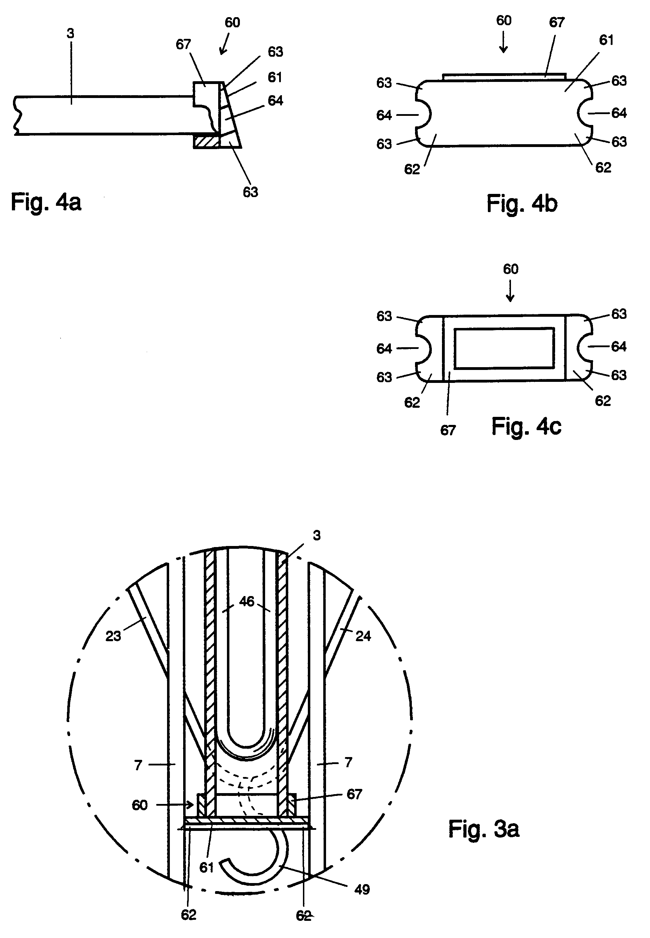

Bei einer weiteren Ausführungsform der erfindungsgemäßen Gepäckhalterung 1 ist am tieferen Ende des Längsträgers 3 ein Lagerbock 60 vorgesehen, der, wie die Fig. 3a zeigt, zwischen den Sattelfedern 7 verankert werden kann. Das vom Längsträger 3 abgewandte Endstück 61 des Lagerbocks 60 weist zwei Flügel 62 auf, die beidseitig horizontal über den eingebauten Längsträger 3 hinausragen. Die Enden der Flügel 62 bilden je zwei Nasen 63, welche je eine U-förmige Nut 64 einrahmen, die sich zu den Flügelenden hin öffnet. Die Nuten 64 sind so dimensioniert, daß sie die Sattelfedern 7 teilweisen umfassen können. Der Abstand der beiden Nuten 64 ist so groß, daß der zwischen den Sattelfedern 7 eingebaute Lagerbock 60 mit den Flügeln 62 eingeklemmt ist. Die Normale der vom Längsträger 3 abgewandten Seite des Lagerbocks 60 ist gegenüber der Längsachse des Längsträgers 3 nach oben gekippt und der Verlauf der Nuten 64 ist parallel zu der genannten Normalen. Die Neigung der Normalen zur Längsachse wird bestimmt durch den Winkel, den der Längsträger 3 und die Sattelfeder 7 in der Vertikalen an dem Ort miteinander bilden, an dem der Lagerblock 60 eingeklemmt ist.

Der Lagerbock 60 kann mit dem Längsträger 3 ein Stück bilden oder, wie es die Fig. 3a zeigt, auf den Längsträger 3 aufgesteckt sein. Die Form, welche aufgesteckt wird, ist auch in den Fig. 4a bis 4c veranschaulicht. Die Fig. 4a zeigt den auf den Längsträger 3 aufgesteckten Lagerbock 60 in (teilweise aufgeschnittener) Seitenansicht, die Fig. 4b zeigt die Sicht auf die vom Längsträger 3 abgewandte Seite des Endstücks 61 und die Fig. 4c die Sicht auf das Ende des Teils 67, das auf den Längsträger 3 gesteckt wird. Das Teil 67, welches in das Endstück 61 übergeht, ist zylindrisch ausgebildet, wobei sein Innenquerschnitt mit dem Außenquerschnitt des Längsträgers 3 übereinstimmt. Das Enstück 61 weist die oben beschriebenen Flügel 62 auf, die horizontal über das Teil 67 hinausragen. Der Lagerbock 60 besteht bevorzugt aus Metall oder Kunststoff.

Beim Einsatz des aufgesteckten Lagerbocks 60 wird beim Einbau des Längsträgers 3 zunächst der Lagerbock 60 mit den Flügeln 62 derart zwischen die beiden Sattelfedern 7 - und zwar in deren Abschnitt direkt hinter dem Befestigungskopf 5 - eingeklemmt, daß die Nuten 64 die Sattelfedern 7 umfassen, und daß das offene, vom Endstück 61 abgewandte Ende des Teils 67 zur Gepäckseite weist. Aufgrund seiner auf den Verlauf der Sattelfedern 7 abgestimmten Form weist dabei das offene Ende schräg nach oben. Dann wird der Längsträger 3 mit seinem von der Gepäckseite abgewandten Ende 13 in das offene Ende des Teils 67 gegebenenfalls unter Unterstützung durch leichte Hammerschläge eingebracht. Anschließend wird auch das gepäckseitige Ende 14 des Längsträgers 3 mittels des Bügels 8, des an ihm befestigten Querträgers 9 und der Querträgerhalter 17, 27 mit den Spannklemmen 16 und 26 an den Sattelfedern 7 fixiert.

Der Lagerbock 60 verbessert die Fixierung des Längsträgers 3 am Sattel 2 und damit die Stabilität der Gepäckhalterung insgesamt. Er kann anstatt oder zusätzlich zu der Halteschleife 19 eingesetzt werden.

Zur weiteren Erhöhung der Sicherheit der Verankerung des Gepäckbehältnisses sind, wie die Fig. 1 und 3 zeigen, in dessen unteren Bereich ein oder mehrere Haken 47, 48 vorgesehen. In die Haken 47, 48 sind Ösen 55, 56 eingehängt, die zu Verbindungselementen 23, 24, beispielsweise in Form von Gummibändern oder -schnüren, gehören, die an ihrem jeweils entgegengesetzten Ende an einem gemeinsamen Haken 49 zusammengeführt sind. Letzterer dient dem Einhängen an dem Steg zwischen den Hinterbaustreben des Rahmens 50 des Fahrrads, beispielsweise eines Rennrades oder Mountainbikes, bei denen die erfindungsgemäße Gepäckhalterung bevorzugt eingesetzt wird.

Besonders bei Geländefahrten erweist sich diese elastische Lagerung des Gepäckbehältnisses 20 und eine dadurch sichere Befestigung am Fahrrad gegenüber einer starren Lagerung, beispielsweise einem Gepächträger, als vorteilhaft.

Das Gepäckbehältnis 20 ist vorzugsweise eine Satteltasche oder ein Rucksack. Es kann entweder zusammen mit dem Befestigungsteil 51 vom Fahrrad gelöst werden oder unmittelbar von dem Befestigungsteil 51 abgezogen werden.

## Patentansprüche

1. Gepäckhalterung, insbesondere für Fahrräder zur Befestigung eines Gepäckbehältnisses, welche ein das Gepäckbehältnis haltendes Befestigungsteil und einen unter dem Sattel befestigten Längsträger mit einer Aufnahme zum Einstecken des Befestigungsteils aufweist, wobei die Aufnahme rohrförmig ausgebildet ist, und ihre Längsachse in Fahrrichtung nach unten geneigt ist, und der Längsträger mit seinem gepäckseitigen Endbereich am hinteren Abschnitt mindestens einer Sattelfeder befestigt ist, dadurch gekennzeichnet, daß der Längsträger zusätzlich mit seinem entgegengesetzten Endbereich (13) unter oder hinter dem Befestigungskopf (5) der Sattelstütze (6) befestigt ist, und daß bei eingestecktem Befestigungsteil das Gepäckbehältnis (20) in Fahrtrichtung hinter dem Längsträger (3) angeordnet ist.

2. Gepäckhalterung nach Anspruch 1, dadurch gekennzeichnet, daß die Aufnahme (4) senkrecht zur Längsachse einen rechteckigen Querschnitt hat.

3. Gepäckhalterung nach Anspruch 1 oder 2, dadurch gekennzeichnet, daß das Befestigungsteil (51) die Form einer - bevorzugt einstückigen - Haltegabel mit räumlich auf Abstand gehaltenen, freien Schenkeln (58, 59) hat, die an dem Gepäckbehältnis angreifen.

4. Gepäckhalterung nach Anspruch 3, dadurch gekennzeichnet, daß die freien Schenkel (58, 59) des Befestigungsteils (51) in Laschen (44, 57) eingreifen, die am Gepäckbehältnis (20) vorgesehen sind.

5. Gepäckhalterung nach einem der Ansprüche 1 bis 4, dadurch gekennzeichnet, daß das andere Ende des Befestigungsteils (51) als Schaft (46) ausgebildet ist, der bevorzugt so bemessen ist, daß er - in die rohrförmige Aufnahme (4) eingeschoben - an den Seitenwänden des Längsträgers (3) anliegt.

6. Gepäckhalterung nach einem der Ansprüche 1 bis 5, dadurch gekennzeichnet, daß der Längsträger (3) mit seinem Endbereich (14) über einen ihn teilweise umfassenden Bügel (8) an einem Querträger (9) befestigt ist, der drehbar in Querträgerhaltern (11, 21) gelagert ist, die ihrerseits an mindestens einer Sattelfeder (7) angeklemmt sind.

7. Gepäckhalterung nach Anspruch 6, dadurch gekennzeichnet, daß der Bügel (8) bis zum Ende des Einbaus relativ zum Längsträger (3) parallel zur Längsachse der Aufnahme (4) verschiebbar ist und im eingebauten Zustand am Längsträger (3) festgeklemmt ist.

8. Gepäckhalterung nach Anspruch 6 oder 7, dadurch gekennzeichnet, daß der Querträger (9) mittels Spannklemmen (16, 26) an mindestens einer Sattelfeder (7) fixiert ist.

9. Gepäckhalterung nach einem der Ansprüche 1 bis 8, dadurch gekennzeichnet, daß der Längsträger (3) mit seinem Endbereich (13) mit einer gegebenenfalls flexiblen Halterung an der Sattelstütze (6) befestigt ist.

10. Gepäckhalterung nach Anspruch 9, dadurch gekennzeichnet, daß die Halterung eine flexible, bevorzugt aus Metall oder Kunststoff bestehende Halteschlaufe (19) darstellt, die bevorzugt fest um die Sattelstütze (6) mit ihrem Befestigungskopf (5) gebunden ist.

11. Gepäckhalterung nach einem der Ansprüche 1 bis 10, dadurch gekennzeichnet, daß ein bevorzugt aus einem Gummiband oder einer Gummischnur bestehendes Verbindungselement (23, 4) zur weiteren Befestigung des Gepäckbehältnisses (2) vorgesehen ist.

12. Gepäckhalterung nach einem der Ansprüche 1 bis 11, dadurch gekennzeichnet, daß am in Fahrtrichtung vorderen Endbereich (13) des Längsträgers (3) ein Lagerbock (60) vorgesehen ist, mit dem sich der Längsträger (3) an mindestens einer Sattelfeder (7) befestigen läßt.

13. Gepäckhalterung nach Anspruch 12,
dadurch gekennzeichnet, daß der bevorzugt aus Metall oder Kunststoff bestehende und bevorzugt mit dem Längsträger (3) ein Stück bildende oder auf ihn aufgesteckte Lagerbock (60) zwei horizontal vom (eingebauten) Längsträger (3) abstehende Flügel (62) aufweist, wobei am Ende der Flügel (62) je eine sich zum Ende hin öffnende Nut (64) vorhanden ist, wobei die Nuten so dimensioniert sind, daß sie die Sattelfedern (7) teilweise umfassen können und einen Abstand voneinander haben, der geringfügig größer ist als der der Sattelfedern (7) voneinander.

14. Gepäckhalterung nach einem der Ansprüche 1 bis 13, dadurch gekennzeichnet, daß das Gepäckbehältnis in Fahrtrichtung hinter dem Sattel (2) angeordnet ist.

## Claims

1. Luggage holder, in particular for bicycles, for fastening a luggage container, being provided with a fastening part securing the luggage container and a longitudinal beam fastened underneath the saddle, having a receptacle for inserting the fastening part, said receptacle being shaped tubular and its longitudinal axis being inclined downward in driving direction, and the longitudinal beam being fastened with its luggage-side end part to the rear section of at least one saddle spring, characterized in that the longitudinal beam is additionally fastened with its opposite end part (13) underneath or behind the fastening head (5) of the saddle pillar (6) and that, with inserted fastening part, the luggage container (20) is disposed behind the longitudinal beam (3) seen in driving direction.

2. Luggage holder as claimed in claim 1, characterized in that the said receptacle (4) has a rectangular cross section orthogonal with respect to the longitudinal axis.

3. Luggage holder as claimed in claim 1 or 2, characterized in that the said fastening part (51) has the form of a - preferably one-piece - holding fork with spatially distant free prongs (58, 59) which engage into the luggage container.

4. Luggage holder as claimed in claim 3, characterized in that the free prongs (58, 59) of the said fastening part (51) engage into lugs (44, 57) which are provided on the luggage container (20).

5. Luggage holder as claimed in any one of claims 1 through 4, characterized in that the other end of the fastening part (51) is made in the form of a shaft (46) which is preferbly dimensioned so that it rests against the lateral sides of the longitudinal beam (3) - when inserted into the tubular receptacle (4).

6. Luggage holder as claimed in any one of claims 1 through 5, characterized in that the longitudinal beam (3) is fastened with its end part (14) by means of a frame (8) partly embracing it, to a crossbeam (9) which is rotatably supported in crossbeam holders (11, 21) which, in turn, are clamped to at least one saddle spring (7).

7. Luggage holder as claimed in claim 6, characterized in that the said frame (8) is slideably parallel to the longitudinal axis of the receptacle (4) relative to the longitudinal beam (3) until the assembly is completed, and is clamped to the longitudinal beam (3) when in inserted condition.

8. Luggage holder as claimed in claim 6 or 7, characterized in that the crossbeam (9) is fixed to at least one saddle spring (7) by means of strainers (16, 26).

9. Luggage holder as claimed in any one of claims 1 through 8, characterized in that the longitudinal beam (3) is fastened with its end part (13) with a likewise, if needs be, flexible holder to the saddle pillar (6).

10. Luggage holder as claimed in claim 9, characterized in that the said holder is a flexible holding strap (19) preferably consisting of metal or plastic material which preferably is firmly bound around the saddle pillar (6) with its fastening head (5).

11. Luggage holder as claimed in any one of claims 1 through 10, characterized in that a connecting element (23, 4) preferably consisting of rubber band or a rubber cord is provided for farther fastening of the luggage container.

12. Luggage holder as claimed in any one of claims 1 through 11, characterized in that, in the frontal end part (13) of the longitudinal beam (3) seen in driving direction, a fixed support (60) is provided by means of which the longitudinal beam (3) can be mounted to at least one saddle spring (7).

13. Luggage holder as claimed in claim 12, characterized in that the fixed support (60) consisting preferably of metal or plastic material and preferably being made in one integral piece with the longitudinal beam (3) or being slipped on it, is provided with two wings (62) which jut out from the (mounted) longitudinal beam (3), at the ends of said wings (62) being provided a groove (64) each opening toward the end, said grooves being dimensioned so that they are able to partly embrace the saddle springs (7), and being so spaced from one another that the space between them is slightly larger than that between the saddle springs (7).

14. Luggage holder as claimed in any one of claims 1 through 13, characterized in that the luggage container is disposed behind the saddle seen in driving direction.

## Revendications

1. Porte-bagages, destiné en particulier à des bicyclettes pour la fixation d'un récipient à bagages, muni d'un élément de fixation maintenant le récipient à bagages et d'un longeron fixé sous la selle avec logement pour l'introduction de l'élément de fixation, le logement étant en forme de tuyau et son axe longitudinal étant incliné vers le bas dans le sens de la marche, et la partie arrière de l'extrémité côté bagage du longeron étant fixée au minimum à un des ressorts de la selle, caractérisé en ce que le longeron est de plus fixé par l'extrémité opposée (13) au-dessous de la tête de fixation (5) du tube porte-selle (6) ou bien derrière et en ce que lorsque l'élément de fixation est introduit en place, le récipient à bagages (20) est aligné derrière le longeron (3) dans le sens de la marche.

2. Porte-bagages selon la revendication 1, caractérisé en ce que le logement (4) dispose d'une section rectangulaire verticalement par rapport à l'axe longitudinal.

3. Porte-bagages selon la revendication 1 ou 2, caractérisé en ce que l'élément de fixation (51) a la forme d'une fourche de retenue - de préférence en une seule pièce - avec des montants libres maintenus à distance (58, 59) prenant sur le récipient à bagages.

4. Porte-bagages selon la revendication 3, caractérisé en ce que les montants libres (58, 59) de l'élément de fixation (51) s'accrochent dans les attaches (44, 57) dont est équipé le récipient à bagages (20).

5. Porte-bagages selon les revendications 1 à 4, caractérisé en ce que l'autre extrémité de l'élément de fixation (51) est formée par une tige (46) de préférence dimensionnée de façon à être appliquée contre les parois latérales du longeron (3) lorsqu'elle est introduite dans le logement en forme de tuyau (4).

6. Porte-bagages selon les revendications 1 à 5, caractérisé en ce que l'extrémité (14) du longeron (3) est fixée sur une barre transversale (9) par une bride (8) l'entourant en partie et logée de manière à pouvoir pivoter dans les supports des barres transversales (11, 21) fixés quant à eux au minimum à un des ressorts de la selle (7).

7. Porte-bagages selon la revendication 6, caractérisé en ce que la bride (8) peut coulisser jusqu'au montage définitif par rapport au longeron (3) parallèlement à l'axe longitudinal du logement (4) et est fixée sur le longeron (3) une fois le montage réalisé.

8. Porte-bagages selon les revendications 6 ou 7, caractérisé en ce que la barre transversale (9) est fixée au moyen de tendeurs à pince (16, 26) au minimum à un des ressorts de la selle (7).

9. Porte-bagages selon l'une des revendications 1 à 8, caractérisé en ce que l'extrémité (13) du longeron (3) est fixée le cas échéant à l'aide d'un support flexible sur le tube porte-selle (6).

10. Porte-bagages selon la revendication 9, caractérisé en ce que le support est constitué d'une courroie de soutien (19) flexible de préférence en métal ou en plastique, fixée de préférence autour du tube porte-selle (6) au moyen de sa tête de fixation (5).

11. Porte-bagages selon l'une des revendications 1 à 10, caractérisé en ce qu'un élément de liaison (23, 4), de préférence constitué par un bracelet élastique ou une bande élastique, est prévu pour la fixation supplémentaire du récipient à bagages (2).

12. Porte-bagages selon l'une des revendications 1 à 11, caractérisé en ce qu'un support d'appui (60) est prévu à l'extrémité avant du longeron (3) dans le sens de la marche (13) au moyen duquel le longeron (3) peut être fixé au minimum à un des ressorts de la selle (7).

13. Porte-bagages selon la revendication 12, caractérisé en ce que le support d'appui (60), de préférence en métal ou en plastique et constitué de préférence d'une seule pièce avec le longeron (3) ou bien introduit sur celui-ci est muni de deux ailes (62) dépassant à l'horizontale du longeron (3) (mis en place), chaque extrémité des ailes (62) disposant d'une rainure (64) s'ouvrant vers l'extrémité, les rainures étant dimensionnées de façon à pouvoir recouvrir en partie les ressorts de la selle (7) et à être à peine plus espacées l'une par rapport à l'autre que les ressorts de la selle (7) l'un par rapport à l'autre.

14. Porte-bagages selon l'une des revendications 1 à 13, caractérisé en ce que le récipient à bagages est aligné derrière la selle (2) dans le sens de la marche.
